# EUROPÄISCHE PATENTSCHRIFT

(11) **EP 2 233 761 B1**
(45) Veröffentlichungstag und Bekanntmachung des Hinweises auf die Patenterteilung: **28.12.2011**
(21) Anmeldenummer: 10004029.4
(22) Anmeldetag: 10.07.2007
(51) Int. Cl.: F16C 33/38, F16C 33/60, F16C 43/04

(54) **Geteiltes Wälzlager**
Split roller bearing
Palier de roulement séparé

(30) Priorität: 28.07.2006 DE 102006034967
(43) Veröffentlichungstag der Anmeldung: 29.09.2010
(62) Teilanmeldung aus: 07013435.8
(73) Patentinhaber: Schaeffler Technologies GmbH & Co. KG, 91074 Herzogenaurach (DE)
(72) Erfinder: Glück, Stefan, 97424 Schweinfurt (DE)

(56) Entgegenhaltungen:
- JP-A- 8 028 580
- US-A1- 2003 170 092
- US-A1- 2006 104 556

## Beschreibung

### Gebiet der Erfindung

Die Erfindung betrifft ein geteiltes Wälzlager, umfassend einen die Wälzkörper enthaltenden Käfig und einen diesen umgebenden Lagerring, wobei der Käfig aus zwei miteinander verbundenen Käfigsegmenten und der Lagerring aus zwei miteinander verbundenen Ringsegmenten besteht, wobei an den Käfigsegmenten und den Ringsegmenten Befestigungsaufnahmen für der Segmentverbindung dienende Befestigungsmittel vorgesehen sind.

### Hintergrund der Erfindung

Bei derartigen geteilten Wälzlagern werden die Käfig- und die Ringsegmente miteinander verschraubt, um das Lager zu montieren. Hierfür ist es erforderlich, an den miteinander zu verbindenden Segmenten entsprechende Aufnahmen für eine Verbindungsschraube vorzusehen, die entsprechend mit Innengewinden versehen werden müssen. Neben der relativ aufwendigen Herstellung, bedingt durch die Ausbildung der Gewindelöcher und der erforderlichen Unterscheidung zwischen Schraubenloch- und Gewindeseite, kann es unter Umständen vorkommen, dass sich die Verbindungsschraube im Betrieb auch löst und das Wälzlager sich öffnet. Weiterhin kann der Fall eintreten, dass der Monteur eine oder mehrere Schrauben nicht richtig anzieht, wie auch grundsätzlich die Integration der Schrauben unter Umständen aufgrund der gegebenen Platzverhältnisse schwierig sein kann.

US 2006/0104556 A1 beschreibt ein geteiltes Wälzlager mit einem die Wälzkörper enthaltenden Käfig und einen diesen umgebenden Lagerring, wobei der Lagerring aus zwei miteinander verbundenen Ringsegmenten besteht, wobei an einer der beiden Stirnflächen eines jeden der Ringsegmente eine Befestigungsaufnahme, nämlich ein Loch, insbesondere ein Sackloch, für ein der Segmentverbindung dienendes Befestigungsmittel, nämlich einen an der gegenüberliegenden Stirnfläche des anderen Ringsegments ausgebildeten Zapfen, vorgesehen ist, so dass die Zapfen mit den Sacklöchern eine Nut-Feder-Verbindung ausbilden.

### Zusammenfassung der Erfindung

Der Erfindung liegt damit das Problem zugrunde, ein geteiltes Wälzlager anzugeben, dessen Segmente auf vereinfachte Weise miteinander verbindbar bzw. verbunden sind.

Zur Lösung dieses Problems ist ein geteiltes Wälzlager mit den Merkmalen von Anspruch 1, vorgesehen.

Bei dem erfindungsgemäßen Wälzlager kommt ein auf dem Wälzlagergebiet völlig neuer Verbindungsmechanismus zum Einsatz. Erfindungsgemäß werden Verbindungsmittel aus einer Formgedächtnis-Legierung verwendet. Bei diesem Material, häufig auch SMA-Material (SMA = Shape Memory Alloy) genannt, handelt es sich um eine Metalllegierung, die in Abhängigkeit der Temperatur eine Formänderung vornehmen kann. Bei diesen Materialien handelt es sich zumeist um Legierungen auf Basis eines CuAINi-Systems oder eines NiTi-Systems. Wie beschrieben, zeichnen sich diese Legierungen dadurch aus, dass sie infolge geeigneter Behandlung aufgrund einer martensitischen Umwandlung ihre Gestalt in Abhängigkeit der Temperatur ändern. Voraussetzung für das Auftreten des Formgedächtniseffekts ist eine Umwandlung von einer Kristallstruktur in eine martensittische Struktur mit einer bestimmten Stapelfolge. Die Umwandlung ist reversibel, was darauf zurückzuführen ist, dass bei der Umwandlung des Martensits zum Austritt nur geringe elastische Spannungen entstehen, die praktisch keine irreversible Verformung infolge Versetzungsbewegungen bewirken. Ein Verbindungselement aus einem solchen Material kann also seine Form zwischen einer Montageform, in welcher es im Rahmen der Montage in die entsprechenden Befestigungsaufnahmen eingesetzt wird, und einer Befestigungsform, in welcher es die Verbindung der Segmente bewerkstelligt, bei entsprechender Umgebungstemperatur ändern.

Unter Verwendung solcher Verbindungsmittel sind entsprechende Gewindelöcher etc. bei dem erfindungsgemäßen Wälzlager nicht mehr vorzusehen, nachdem die Verbindung allein aufgrund eines Kraft- und Formschlusses zwischen Verbindungsmittel und der Befestigungsaufnahme, und damit dem Segment erfolgt. Ein unbeabsichtigtes Lösen ist hier nicht möglich, da die Verbindungsmittel extrem fest verankert sind und ihre Form ohne entsprechenden äußeren Temperatureinfluss nicht mehr ändern. Auch ist es nicht erforderlich, zwischen verschiedenen Segmentseiten zu unterscheiden, nachdem am zweckmäßigsten sowohl an den Segmenten als auch am Verbindungsmittel symmetrische Formen vorgesehen werden.

Die Form der Befestigungsaufnahmen sollte erfindungsgemäß im wesentlichen der Form des in die Befestigungsform gewandelten Verbindungsmittels entsprechen, jedoch für eine formschlüssige Verbindung im Vergleich zum Verbindungsmittel untermaßig sein, so dass man einen guten Formschluss erhält und die Trennstelle der beiden Ring- oder Käfigsegmente fest verbunden ist.

Die Befestigungsaufnahmen selbst sind als in die Stirnfläche der zu verbindenden Segmente eingebrachte Eintiefungen in Form von Fräsungen oder Sacklöchern ausgeführt, wobei sich der Querschnitt zum Eintiefungsgrund hin erweitert. Sie sind also in gewisser Weise unregelmäßig bzw. hinterschnitten, so dass sich eine entsprechende formschlüssige Verbindung, die die beiden Segmente auch fest aneinander zieht, gegeben ist. Im Wesentlichen sind die Eintiefungen kegelstumpfartig ausgeführt. In entsprechender Weise stimmt natürlich auch die Befestigungsform der Verbindungsmittel mit dieser Form überein, d.h. in der Befestigungsform weist das Verbindungsmittel zwei übereinander stehende Kegelstümpfe auf, während in entsprechender Weise auch die beiden übereinander liegenden Eintiefungen eine kegelstumpfförmige Geometrie, jedoch leicht untermaßig aufweisen.

Die Montageform eines Verbindungsmittels, in welcher es also in die Eintiefungen eingesetzt werden kann, ist in Wesentlichen stiftartig, sie kann darüber hinaus aber auch derart gewählt sein, dass es unverlierbar an einem Käfig- oder Ringsegment halterbar ist. Es besteht also die Möglichkeit, ein solches Verbindungsmittel in eines der Segmente einzusetzen und dort zu Montagezwecken zunächst unverlierbar zu fixieren, anschließend die Segmente zu schließen und durch entsprechende Temperaturbehandlung durch Formwandlung zu verbinden.

Die Verbindungsmittel selbst können aus einer einen Ein-Weg-Effekt zeigenden Formgedächtnis-Legierung bestehen. Zur Montage eines solchen Verbindungsmittels wird dieses in seiner Montageform zunächst eingesetzt, wonach das Wälzlager erwärmt wird, bis die Umwandlungstemperatur erreicht wird, mithin also die eingangs beschriebene Gefügeänderung und mit dieser verbunden die Formänderung eintritt. Das beispielsweise stiftartige Verbindungsmittel ändert dann seine Form zu einer Doppel-KegelstumpfForm, die die beiden Segmente fest miteinander verbindet. Um es in die Montageform zu bringen, kann das Verbindungsmittel entweder abgekühlt werden und durch mechanische Verformung, z.B. mit einer speziellen Formzange, in diese Montageform gebracht werden. Denkbar wäre es aber auch, die Übergangstemperatur so hoch zu wählen, dass der Stift bei Raumtemperatur in seinem weichen Montagezustand ist und durch Temperaturerhöhung seine Form wandelt. Eine Rückwandlung bei Temperaturerniedrigung erfolgt nicht, da die Formänderung nur in einer Richtung möglich ist.

Alternativ dazu ist auch die Verwendung einer einen Zwei-Weg-Effekt zeigenden Formgedächtnis-Legierung möglich. Diese kann z.B. bei Minustemperaturen die Montageform einnehmen und bei Erwärmung über den Nullpunkt hinaus in die harte, die Verbindung erwirkende Befestigungsform übergehen. Bei solchen Zwei-Weg-Legierungen ist der Formwandlungseffekt reversibel, d. h., durch ein entsprechendes Kühlen des Lagers unter die Umwandlungstemperatur wandelt das Verbindungsmittel seine Form erneut in die Montageform. Dabei ist natürlich darauf zu achten, dass die Temperatur bzw. die Umwandlungstemperatur so gewählt wird, dass eine Formwandlung im Betriebsfall ausgeschlossen ist.

### Kurze Beschreibung der Zeichnungen

Weitere Vorteile, Merkmale und Einzelheiten der Erfindung ergeben sich aus der nachfolgenden Beschreibung der Ausführungsbeispiele sowie anhand der Zeichnungen. Dabei zeigen:
- Fig. 1: ein erfindungsgemäßes Wälzlager, von dem der Übersichtlich- keithalber lediglich der aus zwei Ringsegmenten bestehende Lagerring sowie die zugeordnete Verbindungselemente gezeigt sind,
- Fig. 2: der montierte Ring aus Fig. 1, jedoch noch unverriegelt,
- Fig. 3: den Ring aus Fig. 2 nach der Verbindung, und
- Fig. 4: eine Prinzipdarstellung eines Verbindungselements vor und nach der Formwandlung.

### Detaillierte Beschreibung der Zeichnungen

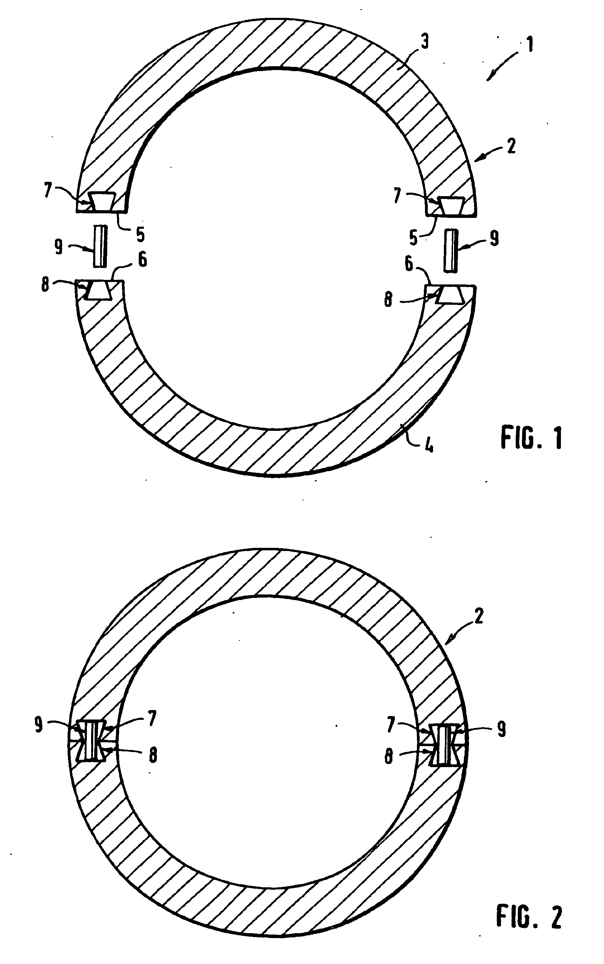

Fig. 1 zeigt ein erfindungsgemäßes geteiltes Wälzlager 1, von dem der Einfachheit halber lediglich die beiden den Lagerring 2 bildenden Ringsegmente 3, 4 dargestellt sind. Beide sind noch nicht miteinander verbunden, sie sind in Fig. 1 voneinander beabstandet gezeichnet. Wie der Schnittdarstellung zu entnehmen ist, sind in den Stirnflächen 5, 6 der beiden Ringssegmente 3, 4 Eintiefungen 7, 8 vorgesehen, die als Löcher ausgeführt sind, die einen im wesentlichen kegelstumpfförmigen Querschnitt besitzen und sich in die Tiefe des jeweiligen Ringsegments 3, 4 hin im Durchmesser erweitern. Es ergibt sich also eine letztlich hinterschnittene Form.

Dargestellt sind ferner zwei Verbindungsmittel 9, die zum Verbinden der beiden Ringsegmente 3, 4 dienen. Die Verbindungsmittel 9 sind im Wesentlichen stiftartig, haben also eine zylindrische Form, in der sie montiert werden.

An dieser Stelle ist darauf hinzuweisen, dass die in Fig. 1 gezeigten Eintiefungen 7, 8 nicht unbedingt als von der Stirnseite her eingebrachte Löcher ausgeführt sein müssen. Denkbar wäre es auch, diese als von der Seite her eingebrachte, sich zur Stirnseite hin öffnenden Einfräsungen auszuführen. Dies würde es ermöglichen, ein Verbindungselement auch von der Seite her einzusetzen, wie es auch denkbar wäre, Verbindungselemente zu verwenden, die bereits in der Montageform eine der Doppelkegelstumpfform einer der Eintiefungen 7, 8 entsprechende Form an einer Seite aufweisen und eine unverlierbare Vormontage des Verbindungselements in einer der Eintiefungen ermöglichen.

Fig. 2 zeigt den Lagerring 2 aus Fig. 1 in der zusammengesetzten, jedoch über die Verbindungsmittel 9 noch nicht verbundenen Form. Ersichtlich nehmen die beiden kegelstumpfförmigen Eintiefungen 7, 8, die übereinander liegen, die Form eines Doppelkegelstumpfes ein. In diesem geschlossenen Hohlraum befindet sich wie gezeigt das jeweilige Verbindungsmittel 9.

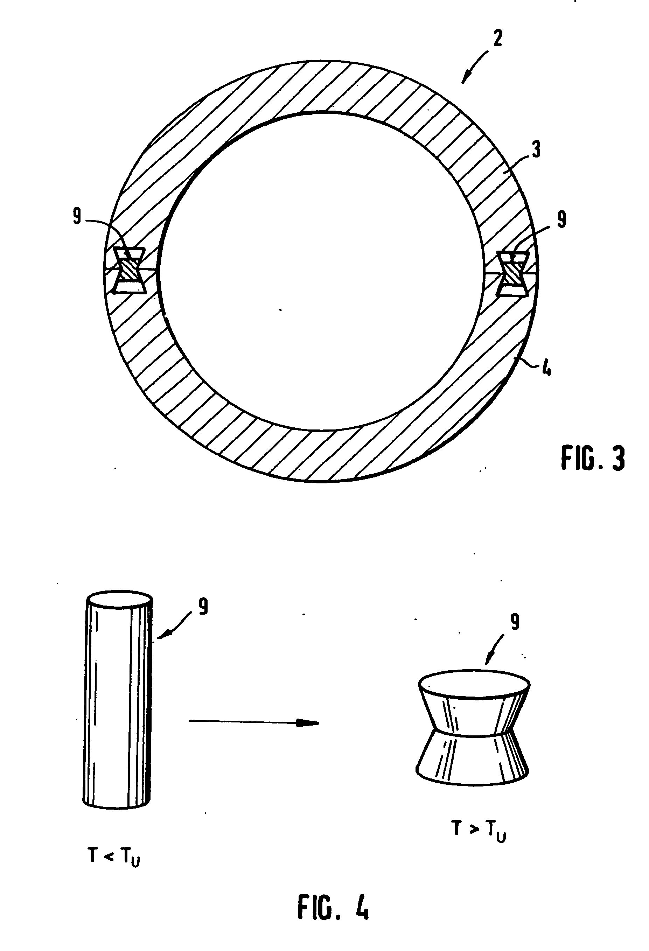

Das Verbindungsmittel besteht wie eingangs beschrieben aus einer Formgedächtnis-Legierung und ist im Stande, in Abhängigkeit der herrschenden Umgebungstemperatur eine Formwandlung von den in den Figuren 1 und 2 gezeigten Montageformen eine in Fig. 3 gezeigte Befestigungsform vorzunehmen. Dies geschieht durch eine Änderung des metallischen Gefüges.

Fig. 3 zeigt den Lagering 2 mit den beiden fest miteinander verbundenen Ringsegmenten 3, 4. Zur Montage wurde die Umgebungstemperatur erhöht, bis die Verbindungsmittel 9 eine Temperatur oberhalb ihrer Umwandlungstemperatur erreichten. Mit Erreichen dieser Umwandlungstemperatur setzt die beschriebene Gefügeänderung ein. Jedes Verbindungsmittel 9 nimmt eine vorher aufgeprägte, also definiert einstellbare Befestigungsform ein. Diese Befestigungsform ist in Fig. 3 gezeigt, sie entspricht ebenfalls der Doppel-Kegelstumpfform, die die beiden Eintiefungen 7,8, die übereinander liegen, aufweisen. Jedoch sind die beiden Eintiefungen etwas untermaßig im Vergleich zum nun mit in die Befestigungsform gewandelten Verbindungsmittel 9, so dass sich ein extrem fester Form- und Kraftschluss ergibt. Beide Ringsegmente sind also über das nunmehr formgewandelte Verbindungsmittel 9 extrem fest miteinander verbunden.

Bei einer verwendeten Formgedächtnis-Legierung, die einen Ein-Weg-Effekt zeigt, ist nur eine Formwandlung in eine Richtung möglich. Wird die Temperatur wieder reduziert, so wandelt sich das Verbindungsmittel nicht in die Montageform gemäß den Figuren 1 und 2 zurück, sondern bleibt in der gewandelten Form gemäß Fig. 3.

Alternativ dazu wäre die Verwendung einer Formgedächtnis-Legierung möglich, die einen Zwei-Weg-Effekt zeigt. Diese würde sich bei einer erneuten Temperaturreduzierung wieder in die Montageform wandeln. Wird nun aber ein Material verwendet, dessen Formwandlungstemperatur sehr niedrig ist, mithin also auch deutlich weit unterhalb der üblichen Einsatztemperatur des Lagers, so ist lediglich sicherzustellen, dass die Montage des Lagers bei einer Temperatur unterhalb dieser ohnehin tiefen Umwandlungstemperatur erfolgt, wonach das Lager erwärmt wird und die Umwandlung in die Befestigungsform erfolgt. Zu Demontagezwecken wäre es nun möglich, das Lager wiederum sehr weit abzukühlen, bis es zur erneuten Umwandlung bei der tiefen Umwandlungstemperatur in die Montageform kommt und das Lager auseinander fällt.

Fig. 4 zeigt exemplarisch in vergrößerter Form ein Verbindungsmittel 9, in der links gezeigten Montageform, die Temperatur T ist kleiner als die Umwandlungstemperatur T_{U}.

In Fig. 4 rechts stehend ist dann die Befestigungsform gezeigt, bei der sich das Verbindungsmittel 9 ausgehend von der zylindrischen Form in die aufgeprägte Doppelkegelstumpf-Form wandelt, wie sie beschrieben wurde. Es verkürzt sich, gleichzeitig verbreitert es sich im Durchmesser.

Wenn gleich die Figuren die Verbindung zweier Ringsegmente beschreiben, ist es selbstverständlich auch denkbar, die Käfigsegmente in dieser Form zu verbinden, wobei in diesem Fall ggf. auf andere Geometrien hinsichtlich der Eintiefungen bzw. der Verbindungsmittel zurückzugreifen ist. Eine Einschränkung hinsichtlich dieser Geometrien ist nicht gegeben, solange die Verbindungsmittel in die entsprechende Form wandeln können und eine feste, form- und kraftschlüssige Verbindung der beiden Segmente über die entsprechend ausgestalteten Eintiefungen möglich ist.

### Bezugszeichenliste

- 1: Wälzlager
- 2: Lagerring
- 3: Ringsegment
- 4: Ringsegment
- 5: Stirnfläche
- 6: Stirnfläche
- 7: Eintiefung
- 8: Eintiefung
- 9: Verbindungsmittel

## Patentansprüche

1. Geteiltes Wälzlager, umfassend einen die Wälzkörper enthaltenden Käfig und einen diesen umgebenden Lagerring, wobei der Käfig aus zwei miteinander verbundenen Käfigsegmenten und der Lagerring aus zwei miteinander verbundenen Ringsegmenten besteht, wobei an den Käfigsegmenten und den Ringsegmenten Befestigungsaufnahmen für der Segmentverbindung dienende Verbindungsmittel vorgesehen sind, wobei die Befestigungsaufnahmen Eintiefungen (7, 8) umfassen, die als Löcher, insbesondere als Sacklöcher, ausgebildet sind,
**dadurch gekennzeichnet,**
**dass** die zum Verbinden der Käfig- und/oder der Ringsegment (3, 4) dienenden Verbindungsmittel (9) aus einer Formgedächtnis-Legierung bestehen,
**dass** die Befestigungsaufnahmen einen im wesentlichen kegelstumpfförmigen Querschnitt besitzen und sich in die Tiefe des jeweiligen Ringsegmentes (3, 4) hin im Durchmesser erweitern,
**dass** die Verbindungsmittel (9) im Wesentlichen stiftartig ausgebildet sind, und
**dass** die Befestigungsaufnahme mit dem Verbindungsmittel eine formschlüssige Verbindung bei Erreichen der Umwandlungstemperatur der Formgedächtnis-Legierung ausbildet.

2. Wälzlager nach Anspruch 1, **dadurch gekennzeichnet, dass** die Verbindungsmittel (9) eine zylindrische Form aufweisen, in der sie montiert werden.

3. Wälzlager nach Anspruch 1 oder 2, **dadurch gekennzeichnet, dass** die Verbindungsmittel (9) aus einer einen Ein-Weg-Effekt zeigenden Formgedächtnis-Legierung bestehen.

4. Wälzlager nach einem der Ansprüche 1 bis 3, **dadurch gekennzeichnet, dass** die Form der Befestigungsaufnahme für die formschlüssige Verbindung im Vergleich zum Verbindungsmittel (9) untermaßig ist.

## Claims

1. Split anti-friction bearing, comprising a cage which contains the rolling bodies and a bearing ring which surrounds the said cage, the cage consisting of two cage segments which are connected to one another and the bearing ring consisting of two ring segments which are connected to one another, fastening receptacles being provided on the cage segments and the ring segments for connecting means which serve for connecting the segments, the fastening receptacles comprising depressions (7, 8) which are formed as holes, in particular as blind holes, **characterized in that** the connecting means (9) which serve for connecting the cage and/or the ring segments (3, 4) consist of a shape memory alloy, **in that** the fastening receptacles have a substantially frustoconical cross section and the diameter of which widens in the depth direction of the respective ring segment (3, 4), **in that** the connecting means (9) are of substantially pin-like configuration, and **in that** the fastening receptacle forms a positively locking connection with the connecting means when the transition temperature of the shape memory alloy is reached.

2. Anti-friction bearing according to Claim 1, **characterized in that** the connecting means (9) have a cylindrical shape, in which they are mounted.

3. Anti-friction bearing according to Claim 1 or 2, **characterized in that** the connecting means (9) consist of a shape memory alloy which exhibits a single-use effect.

4. Anti-friction bearing according to one of Claims 1 to 3, **characterized in that** the shape of the fastening receptacle for the positively locking connection is undersized in comparison with the connecting means (9).

## Revendications

1. Palier de roulement séparé, comprenant une cage contenant le corps de rouleau et une bague de palier de roulement l'entourant, la cage se composant de deux segments de cage reliés entre eux et la bague de palier de roulement se composant de deux segments annulaires reliés entre eux, des logements de fixation étant prévus au niveau des segments de cage et des segments annulaires pour servir de moyens de jonction servant à la jonction des segments, les logements de fixation comprenant des renfoncements (7, 8) prenant la forme de trous, notamment de trous borgnes ;
**caractérisé en ce que** :
les moyens de jonction (9) servant pour la jonction du segment de cage et/ou du segment annulaire (3, 4) se composent d'un alliage à mémoire de forme ;
que les logements de fixation possèdent une section transversale pour l'essentiel en forme de tronconique et que leur diamètre s'élargit à mesure qu'ils s'enfoncent dans le segment annulaire (3, 4) respectif ;
que les moyens de jonction (9) prennent pour l'essentiel une forme de tige ; et
que le logement de fixation forme, avec les moyens de jonction, une liaison réalisée par complémentarité de formes dès que la température de transformation de l'alliage à mémoire de forme est atteinte.

2. Palier de roulement selon la revendication 1, **caractérisé en ce que** les moyens de jonction (9) présentent une forme cylindrique dans laquelle ils sont montés.

3. Palier de roulement selon la revendication 1 ou 2, **caractérisé en ce que** les moyens de jonction (9) se composent d'un alliage à mémoire de forme à effet unilatéral.

4. Palier de roulement selon l'une quelconque des revendications 1 à 3, **caractérisé en ce que** la forme du logement de fixation de la liaison réalisée par complémentarité de formes est sous-dimensionnée par rapport aux moyens de jonction (9).
